# FASCICULE DE BREVET EUROPEEN

(11) **EP 2 098 677 B1**
(45) Date de publication et mention de la délivrance du brevet: **28.09.2011**
(21) Numéro de dépôt: 09370004.5
(22) Date de dépôt: 05.03.2009
(51) Int. Cl.: E06B 9/68, E05F 15/10, G05B 19/00, H02P 3/00

(54) **Procédé de commande d'un dispositif de fermeture et d'ouverture d'un ouvrant à commande filaire**
Verfahren zur Steuerung einer Schließ- und Öffnungsvorrichtung eines Öffnungselements mit Steuerung über Kabelverbindung
Method of controlling a device for closing and opening a door with wired control

(30) Priorité: 06.03.2008 FR 0801227
(43) Date de publication de la demande: 09.09.2009
(73) Titulaire: Deprat Jean SA, 59650 Villeneuve d'Ascq (FR)
(72) Inventeur: Kimpe, Florent, 59650 Villeneuve d'Ascq (FR); Couturier, Philippe, 59650 Villeneuve d'Ascq (FR); Couzinet, Laurent, 59650 Villeneuve d'Ascq (FR)
(74) Mandataire: Boubal, Denis Henri Jacques

(56) Documents cités:
- EP-A- 0 439 422
- EP-A- 0 744 524
- EP-A- 1 626 154
- DE-A1-102004 041 293

## Description

L'invention concerne un procédé de commande d'un dispositif de fermeture et d'ouverture d'un ouvrant à commande filaire. L'invention concerne également un dispositif d'ouverture et de fermeture à commande filaire, tel que notamment un volet roulant.

Dans le domaine des volets roulants, il est connu des moteurs à gestion électronique des fins de course. On entend ici par moteur à gestion électronique, un moteur au sens large, comprenant une partie mécanique avec d'une part le moteur en soi, notamment le stator et le rotor, voire un réducteur, et d'autre part l'électronique de commande avec une carte électronique et un codeur angulaire, par exemple du type magnétique ou optique, pour la détection du déplacement angulaire du rotor.

Ce type de moteur présente un mode de programmation des fins de course au cours duquel les fins de course peuvent être enregistrées et un mode normal d'actionnement au cours duquel la carte électronique coupe l'alimentation des bobinages du moteur lorsque les fins de course sont approchées, voire atteintes, par l'organe mobile.

Actuellement, trois familles de moteur à gestion électronique des fins de course existent sur le marché, à savoir des moteurs à fins de course automatiques, les moteurs à fins de course réglables et des moteurs polyvalents.

Les moteurs à fins de course automatiques permettent un apprentissage automatique des fins de course au cours duquel les fins de course sont repérées par la détection et la reconnaissance automatique de butées physiques, haute et basse. Pour ce faire, la variation d'un paramètre du moteur, telle que par exemple la vitesse du rotor peut être interprétée par l'électronique de commande comme la présence d'un obstacle.

Pour permettre ce mode d'apprentissage automatique des fins de course, le volet roulant doit toutefois nécessairement être équipé de deux butées physiques, haute et basse. Le domaine d'application de ce type de moteur à fins de course automatiques est ainsi concentré sur les applications coffre/PVC dont l'assemblage et la pose sont mieux maîtrisés.

Généralement, les butées mécaniques ou physiques sont constituées, d'une part, pour la butée haute, par deux arrêts du tablier de volet roulant, aptes à engager avec la sous face du coffre de volet roulant, en fin de course haute, et d'autre part, pour la butée basse, par la maçonnerie inférieure de l'ouverture.

De plus, afin de pouvoir mettre en oeuvre la technique de repérage des fins de course, le volet roulant doit être équipé d'un dispositif de verrouillage entre la dernière lame supérieure du tablier et le tambour d'enroulement. Ce type de dispositif existe sous plusieurs formes et permet généralement d'interdire tout relevage frauduleux du tablier en butée basse en créant une liaison rigide entre le tambour et le tablier dans une zone où le tablier n'est pas guidé par les coulisses de volet roulant.

Aussi, si le volet roulant ne dispose pas de butées ou si elles sont trop légères (déformations excessives de la surface du coffre), si des frottements sont trop importants, s'il y a des points durs, des lames en trop, ou encore un tassement insuffisant du tablier, le moteur à fins de course automatiques devient presque inutilisable et les solutions de dépannage peu nombreuses.

Les moteurs à fins de course réglables, contrairement aux moteurs à fins de course automatiques, ne permettent pas un apprentissage automatique des fins de course. En revanche, ils sont plus universels et tolérant avec le produit porteur notamment le volet roulant. Ces moteurs possèdent ainsi un domaine d'application plus large et peuvent être utilisés pour tout type de volet roulant, y compris les portes de garage ainsi que dans le domaine des stores. Ils sont particulièrement sûrs mais sont toutefois pénalisés par l'obligation d'utiliser préalablement un outil d'apprentissage pour la programmation des fins de course. Lors de cette programmation, l'utilisateur doit notamment déplacer l'organe mobile jusqu'à la position de fin de course désirée, pour permettre l'enregistrement de la position des fins de course.

Enfin, les moteurs dits polyvalents sont des moteurs à gestion électronique des fins de course qui peuvent être configurés, soit en mode de fins de course automatiques, soit en mode de fins de course réglables, voire même en mode mixte (par exemple la butée haute est repérée automatiquement par l'électronique de commande, et l'utilisateur déterminant la position de la butée basse manuellement). Toutefois, un outil d'apprentissage est, là aussi, indispensable pour le fonctionnement de ce type de moteur, quelle que soit la configuration choisie.

Aussi, le premier problème auquel se propose de répondre l'invention est de permettre une programmation des fins de course sans la nécessité d'un outil d'apprentissage.

Cela étant, la présente invention permet de résoudre un autre problème développé.

Une fois basculé en mode normal d'actionnement du moteur à gestion électronique de fins de course, l'utilisateur peut commander le volet roulant à la montée ou à la descente, notamment via une commande filaire et plus particulièrement un interrupteur inverseur. L'électronique de commande coupe automatiquement l'alimentation des bobinages du moteur lorsque les fins de course sont atteintes, notamment dans le cas d'un moteur à fins de course réglables, ou encore coupe l'alimentation des bobinages du moteur une fraction de rotation avant d'atteindre les fins de course mémorisées, notamment dans le cas d'un moteur à gestion automatique de fins de course, afin de ne pas buter trop fortement sur les butées physiques. A cet instant, bien souvent; l'arrêt du moteur n'est pas net, le rotor poursuivant sa rotation sur une fraction de tour ou plus, après la coupure d'alimentation, sous l'effet de l'inertie.

Aujourd'hui, lorsque la commande du moteur est filaire, l'interrupteur inverseur commande non seulement l'actionnement du rotor du moteur, dans un sens ou dans l'autre, mais également ferme ou ouvre l'alimentation du moteur, et notamment l'alimentation de l'électronique de commande. Le moteur, au sens large, comprenant la carte électronique et le codeur angulaire, est donc alimenté uniquement lorsque le moteur est actionné.

Dans le cas d'une coupure d'alimentation simultanée avec l'arrêt des fins de course, l'organe mobile peut ainsi poursuivre son déplacement sur une fraction de tour, voire plus, sans que celui-ci ne soit pris en compte par l'électronique de commande. La position réelle de l'organe manoeuvré ne correspond plus à celle observée par l'électronique du moteur. La répétition et l'accumulation de ces petites dérives peuvent provoquer avec la durée un disfonctionnement de l'organe manoeuvré.

On connaît du document DE 10 2004 041 293 un dispositif et un procédé pour la commande d'un organe mobile tel qu'un volet roulant. Selon ce document, le passage en mode de programmation des fins de course se fait lors de la première mise sous tension du dispositif ou encore lors du premier appui par l'utilisateur sur l'interrupteur inverseur.

On connaît du document US-6.078.159 un actionneur de barrière mobile dont le dispositif de commande du moteur réagit à au moins deux activations sur la touche de l'interrupteur de commande du moteur, pendant un bref instant, pour valider un mode de programmation.

Aussi, le but de la présente invention est de pallier tout ou partie des inconvénients précités, notamment en proposant un procédé de commande et un dispositif de fermeture et d'ouverture, permettant notamment la programmation des fins de course sans l'utilisation préalable d'un outil d'apprentissage.

Un autre but de l'invention est de proposer un tel procédé de commande comportant un mode d'apprentissage des fins de course, permettant le passage des points durs.

Un autre but de la présente invention est de proposer un procédé assurant l'intégrité du mécanisme du dispositif d'ouverture et de fermeture lors de son actionnement, plus particulièrement lorsque l'organe mobile rencontre un obstacle intermédiaire en mode normal d'actionnement.

Un autre but de la présente invention est de proposer un dispositif de fermeture et d'ouverture à commande filaire

Un autre but de l'invention est de proposer un dispositif d'ouverture et de fermeture, assurant la fiabilité des fins de cours dans le temps.

D'autres buts et avantages de la présente invention apparaîtront au cours de la description qui va suivre, qui n'est donnée qu'à titre indicatif et qui n'a pas pour but de la limiter.

L'invention concerne tout d'abord un procédé de commande d'un dispositif de fermeture et d'ouverture comportant un organe mobile, ledit organe mobile se déplaçant entre deux positions extrêmes matérialisées par un ou des dispositifs de fins de course, ledit dispositif à commander comportant des moyens d'actionnement de l'organe mobile constitués par un moteur électrique, des moyens filaires de commande de l'organe mobile comportant au moins un interrupteur inverseur, des moyens pour détecter le déplacement de l'organe mobile, ainsi que des moyens logiques de traitement constitués par une circuit électronique pour l'actionnement de l'organe mobile et la gestion de fins de course.

Selon l'invention, ledit procédé comporte au moins deux modes de programmation des fins de course, avec d'une part, un mode d'apprentissage des fins de course automatiques au cours duquel les fins de courses sont repérées par la détection et la reconnaissance automatique des positions des butées physiques, et d'autre part, un mode d'apprentissage des fins de course réglables au cours duquel les fins de courses sont repérées et inscrites par des opérations de commande de l'utilisateur,
ledit procédé comportant de plus un mode normal d'actionnement de l'organe mobile au cours duquel lesdits moyens logiques de traitement provoquent l'arrêt de l'organe mobile lorsque les fins de course mémorisées sont approchées, voire atteintes,
ledit dispositif présentant, en outre, des moyens de déclenchement desdits au moins deux modes de programmation des fins de course,
de plus, le procédé consiste à alimenter de manière continue le circuit électronique des moyens logiques de traitement, ainsi que lesdits moyens pour détecter le déplacement de l'organe mobile, lesdits moyens de déclenchement desdits au moins deux modes de programmation des fins de course étant constitués par le circuit électronique et plus particulièrement par des moyens de détection de changement d'état de l'interrupteur inverseur,
et dans lequel procédé, on déclenche chaque mode de programmation des fins de course désirées par des appuis fugitifs rapprochés sur l'interrupteur inverseur, du type impulsions, d'un nombre déterminé supérieur à un, et ledit mode d'apprentissage des fins de course automatiques et le mode d'apprentissage des fins de course réglables étant respectivement déclenchés par un nombre N1 et un nombre N2 d'appuis fugitifs rapprochés avec N1 différent de N2.

L'invention concernera également un dispositif de fermeture et d'ouverture pour la mise en oeuvre du procédé.

L'invention sera mieux comprise à la lecture de la description suivante, accompagnée des dessins en annexe parmi lesquels :
- les figures 1a et 1b sont respectivement des vues de face et de côté, selon une coupe verticale, d'un dispositif d'ouverture et de fermeture conforme selon un mode de réalisation, plus particulièrement d'un volet roulant, l'organe mobile manoeuvré en butée basse,
- les figures 2a et 2b sont respectivement des vues de face et de côté, selon une coupe verticale du volet roulant tel qu'illustré aux figures 1a et 1b, l'organe mobile manoeuvré en butée haute,
- la figure 3 est un diagramme schématique illustrant un procédé de commande conforme à l'invention, et plus particulièrement le déclenchement d'un mode d'apprentissage automatique des fins de course conforme à l'invention selon un mode de réalisation,
- la figure 4 est un diagramme schématique d'un procédé de commande conforme à l'invention, et plus particulièrement d'un mode d'apprentissage des fins de course selon un second mode de réalisation conforme à l'invention,
- la figure 5 est un diagramme schématique d'un procédé de commande conforme à l'invention, et plus particulièrement du déclenchement d'un mode d'apprentissage à fins de course réglables conforme à l'invention selon un mode de réalisation,
- les figures 6 et 7 sont respectivement deux exemples d'un moteur à gestion électronique de fins de course, à commande filaire, avec notamment un fil de commande,
- les figures 8 et 9 sont respectivement deux exemples du câblage d'un moteur, avec notamment deux fils de commande,
- les figures 10 et 11 sont respectivement deux exemples du câblage d'un moteur, avec trois fils de commande,
- les figures 12 et 13 sont respectivement une vue schématique du câblage d'un moteur de l'état de la technique et son schéma électrique.

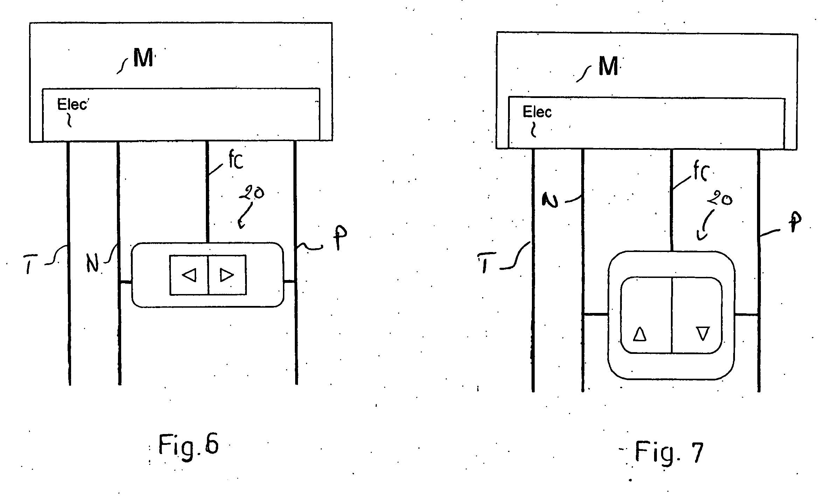

Les exemples des Figures 6 à 11 ne sont pas couverts par les revendications mais facilitent la compréhension de l'invention.

Nous décrivons par la suite le procédé de commande d'un dispositif d'ouverture et de fermeture conforme à l'invention.

Dans la description, le dispositif d'ouverture et de fermeture se référera selon les exemples illustrés à un volet roulant. Toutefois, l'invention n'est pas limitée à cette application particulière.

L'invention concerne un procédé de commande d'un dispositif 1 de fermeture et d'ouverture, tel qu'un volet roulant, comportant un organe mobile 2, tel qu'un tablier.

L'organe mobile 2 se déplace entre deux positions extrêmes matérialisées par un ou des dispositifs de fins de course.

Le dispositif d'ouverture et de fermeture 1 comprend des moyens d'actionnement de l'organe mobile constitué par un moteur électrique, notamment avec un réducteur, par exemple du type tubulaire et présente des moyens filaires de commande de l'organe mobile comportant au moins un interrupteur inverseur 20. Aussi, il s'agit d'une commande filaire, par exemple du type interrupteur mural. Le câblage au moteur est notamment à quatre fils (phase, neutre, commande, terre).

Le dispositif d'ouverture et de fermeture 1 présente des moyens pour détecter le déplacement de l'organe mobile constitués, par exemple, par un codeur angulaire, qui permet de suivre le déplacement du rotor du moteur. Le codeur angulaire peut être du type optique, comprenant notamment une roue codée par une alternance de segments réfléchissants ou non et associée à une cellule de détection optique, ou encore du type magnétique avec un capteur à effet hall associé à une roue codée magnétiquement par une alternance de pôles aimantés nord/sud.

Le dispositif comprend des moyens logiques de traitement constitués par un circuit électronique comprenant notamment un contrôleur, le procédé comportant, d'une part au moins un mode de programmation des fins de course, et d'autre part, un mode normal d'actionnement de l'organe mobile au cours duquel les moyens logiques de traitement provoquent l'arrêt de l'organe mobile lorsque les fins de course mémorisées sont approchées, voire atteintes par l'organe mobile.

Plus particulièrement, les moyens pour détecter le déplacement de l'organe mobile, notamment le codeur angulaire, émettent des impulsions qui permettent au circuit électronique, notamment à un contrôleur, de connaître la position de l'organe mobile en incrémentant ou décrémentant un registre.

Selon un exemple, lors de la programmation des fins de course, ce registre peut être notamment mis à zéro lors de la programmation de la première fin de course. Le tablier est ensuite actionné en direction de la deuxième butée physique, le registre s'incrémentant avec le déplacement de l'organe mobile jusqu'à la position de la deuxième position de fin de course. La valeur du registre est alors enregistrée dans une deuxième mémoire au registre.

Lors du fonctionnement en mode normal de l'organe mobile, le premier registre, dénommé compteur de position en temps réel, suit le déplacement de l'organe mobile et s'incrémente ou se décrémente en fonction de ses déplacements, et peut être continuellement comparé à la valeur du deuxième registre.

Plus particulièrement, les moyens logiques de traitement coupent l'alimentation du moteur lorsque la fin de course basse est atteinte, ou encore à une fraction de tour avant la fin de la course basse, c'est-à-dire à quelques unités avant que le registre n'atteigne la valeur zéro, dans le cas de la descente du volet roulant. Dans le cas de la montée du volet roulant, lesdits moyens logiques de traitement coupent l'alimentation du moteur lorsque le compteur atteint la valeur de la fin de course haute, ou encore, à quelques unités de cette valeur, une fraction de tour avant que l'organe mobile n'atteigne la fin de course haute.

Selon l'invention, d'une part, le procédé consiste à alimenter de manière continue le circuit électronique des moyens logiques de traitement ainsi que lesdits moyens pour détecter la période de déplacement de l'organe mobile, lesdits moyens de déclenchement dudit au moins un mode de programmation des fins de course étant constitués par la carte électronique et plus particulièrement par des moyens de détection de changement d'état de l'interrupteur inverseur.

Selon le procédé de l'invention, d'autre part, on déclenche le ou chaque mode de programmation des fins de course désirées par des appuis fugitifs rapprochés sur l'interrupteur inverseur, du type impulsions, d'un nombre déterminé supérieur à un, et le cas échéant, distinct dans le cas d'une pluralité de modes de programmation.

Avantageusement, le procédé conforme à l'invention utilise l'interrupteur inverseur en place, quels que soient sa marque notamment et son mode de fonctionnement, pour transmettre un code qui sera compris et interprété par l'électronique de commande du dispositif. On remarque ainsi par ailleurs que la mise en oeuvre de cette technique nécessite l'alimentation continue de l'électronique de commande et donc du circuit électronique notamment pendant la salve d'appuis rapprochés.

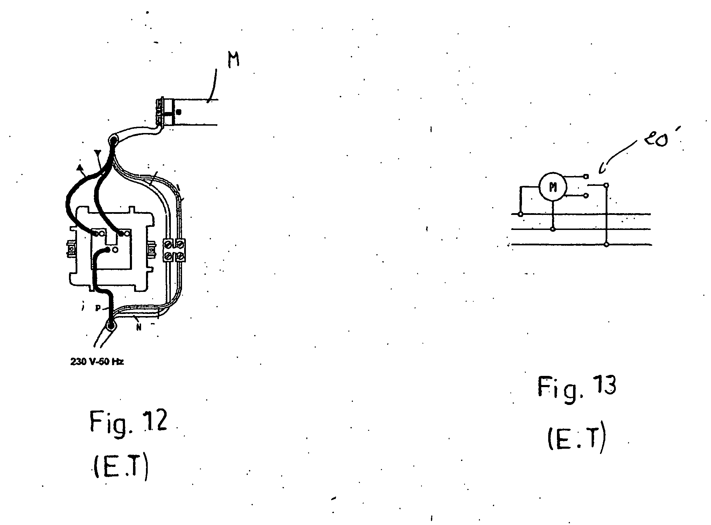

A cet effet, le câblage du dispositif d'ouverture et de fermeture doit, contrairement au câblage à commande filaire de l'état de l'art, illustré aux figures 12 et 13 notamment, permettre une alimentation en continu de l'électronique de commande, plus particulièrement du circuit électronique. Les figures 6 et 7, les figures 8 et 9, et les figures 10 et 11 illustrent respectivement trois modes de réalisation du câblage possibles, qui seront notamment décrits plus en détail par la suite. Ces trois modes de réalisation se distinguent par le nombre de fils de commande utilisés. Ils permettent tous une alimentation de l'électronique de commande en continu.

Par exemple, quatre appuis fugitifs rapprochés peuvent permettre de déclencher le mode de programmation des fins de course. Un appui unique ou plusieurs appuis prolongés sur l'interrupteur provoquent quant à eux l'actionnement de l'organe mobile dans un sens ou dans l'autre. Le fonctionnement de ce procédé sera mieux compris à la lecture des exemples de fonctionnement.

Selon l'invention, le dispositif peut comporter le cas échéant deux butées physiques 3, 4 pour l'organe mobile 2, le procédé comportant au moins deux modes de programmation des fins de course, avec d'une part, un mode d'apprentissage des fins de course automatiques au cours duquel les fins de course sont repérées par la détection et la reconnaissance automatique des positions des butées physiques, et d'autre part, un mode d'apprentissage des fins de course réglables au cours duquel les fins de course sont repérées et inscrites par des opérations de commande de l'utilisateur, le mode d'apprentissage des fins de course automatiques et le mode d'apprentissage des fins de course réglables étant respectivement déclenchés par un nombre N₁ et un nombre N₂ d'appuis fugitifs rapprochés avec N₁ différent de N₂.

Par exemple, pour N₁ = 4, quatre impulsions font entrer le procédé dans le mode d'apprentissage des fins de course automatiques au cours duquel les positions des fins de course sont enregistrées dès la détection des butées physiques, puis à l'expiration d'une temporisation, ou encore dès que les deux fins de course sont enregistrées, le procédé passe en mode normal d'actionnement de l'organe mobile.

Par exemple pour, N₂ = 6, six impulsions font entrer dans le mode de programmation des fins de course réglables. L'opérateur va donc commander l'organe mobile jusqu'à son point haut désiré par un seul ou plusieurs appuis sur la commande, puis la position de fin de course est enregistrée dans une mémoire du circuit électronique, notamment à l'expiration d'une première temporisation d'inaction du moteur. Ensuite, l'utilisateur descend jusqu'à son point bas désiré. La mémoire enregistre la position de cette deuxième fin de course, notamment à l'expiration d'une deuxième temporisation d'inaction du moteur. Une temporisation de sortie peut permettre ensuite le retour du procédé en mode normal d'actionnement.

Il est à noter par ailleurs que l'alimentation en continu d'une part, des moyens logiques de traitement, particulièrement du circuit électronique et d'autre part, des moyens pour détecter la période de déplacement de l'organe mobile tel que notamment le codeur angulaire permet également de suivre sans discontinuité dans le temps la position réelle de l'organe mobile.

Dans le cas d'un glissement de l'organe mobile (moteur non actionné), les moteurs logiques de traitement via le codeur angulaire notamment peuvent continuer à prendre en compte l'information de déplacement. Lors du prochain actionnement de l'organe mobile, le circuit électronique provoque la coupure d'alimentation des bobinages du moteur aux fins de course, sans dérive.

En mode normal d'actionnement, selon un mode avantageux de réalisation, les moyens logiques de traitement peuvent provoquer l'arrêt de l'organe mobile, à savoir la coupure d'alimentation des bobinages du moteur dès la détection d'un obstacle, notamment intermédiaire. Toutefois, cette position n'est pas enregistrée comme fin de course.

Selon ce mode de réalisation et dans le cas d'un apprentissage automatique des fins de course, la sensibilité de la détection au blocage en mode normal d'actionnement peut être différent de la sensibilité de détection en mode d'apprentissage des fins de course automatiques. Par exemple la sensibilité de la détection au blocage en mode normal d'actionnement peut être supérieure à la sensibilité de détection en mode d'apprentissage des fins de course automatiques, permettant à l'organe mobile de passer un point dur important dans la phase d'apprentissage alors qu'un point dur de même intensité provoquerait, selon cet exemple, l'arrêt de l'organe mobile dans le mode normal d'actionnement. Selon cet exemple, on part sur le postulat que des contraintes importantes sur le mécanisme peuvent être tolérées lors du mode d'apprentissage des fins de course automatiques, celles-ci ne l'étant plus lorsqu'à répétition, l'organe mobile subit ces contraintes lors du mode normal d'actionnement, le mécanisme du dispositif pouvant subir le phénomène de fatigue et finir par s'altérer.

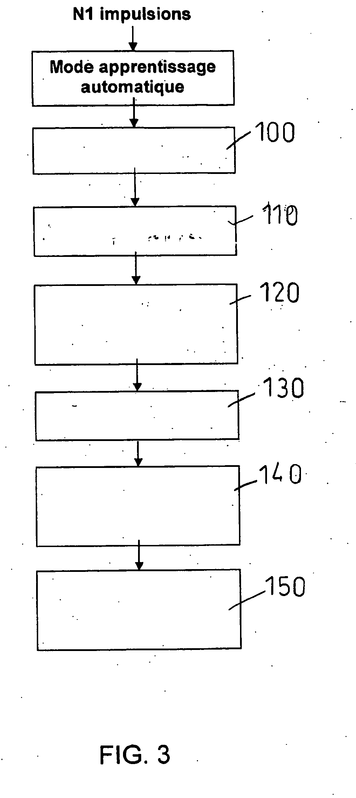

Nous décrivons maintenant en détails quelques exemples de modes d'apprentissage de fins de course plus particulièrement illustrés aux figures 3 à 5.

Par exemple, à la figure 3, N₁ appuis rapprochés sur l'interrupteur inverseur provoquent le départ d'une temporisation au cours de laquelle le procédé est en mode d'apprentissage automatique des fins de course, l'organe mobile étant actionné par lesdits moyens d'actionnement et lesdits moyens de commande par l'utilisateur, dans un sens puis dans l'autre, pour le repérage successif des butées physiques et l'enregistrement de leur position comme fin de course, l'expiration de ladite temporisation provoquant le retour du procédé en mode normal d'actionnement de l'organe mobile.

Plus particulièrement, tel qu'illustré à la figure 3, le mode d'apprentissage des fins de course est provoqué par N₁ impulsions sur l'interrupteur inverseur, le procédé d'apprentissage comprenant ensuite les étapes suivantes :
- départ d'une temporisation (Etape 100),
- actionnement de l'organe mobile dans un premier sens par l'opérateur (Etape 110),
- détection de la première butée physique, l'organe mobile étant arrêté par le circuit électronique (coupure, alimentation, bobinage, moteur), la position de la première fin de course est enregistrée, notamment par la mise à zéro d'un registre d'incrémentation/décrémentation (Etape 120),
- actionnement de l'organe mobile dans le deuxième sens par l'opérateur, le registre s'incrémentant selon les impulsions d'un codeur angulaire en fonction du déplacement de l'organe mobile (Etape 130),
- détection de la deuxième butée physique, le circuit électronique provoque l'arrêt du moteur (coupure alimentation bobinage moteur), et l'enregistrement de la deuxième fin de course, notamment en copiant la valeur du registre, dénommée compteur de position réelle dans un deuxième registre ou mémoire (Etape 140),
- à l'expiration de la temporisation, le circuit électronique provoque le retour en mode normal d'actionnement (Etape 150).

Dans le mode normal d'actionnement, la valeur du premier registre, à savoir le compteur de position est comparée sans cesse à la valeur de la deuxième mémoire. Lorsque le compteur de position réelle atteint une valeur de quelques unités supérieures à zéro, c'est-à-dire l'organe mobile est à une fraction de tour de la première fin de course, les moyens logiques de traitement provoquent l'arrêt du moteur (coupure, bobinage, moteur). Lorsque la valeur du compteur de position réelle est à quelques unités de la valeur de la deuxième mémoire, les moyens logiques de traitement provoquent l'arrêt du moteur (coupure alimentation bobinage moteur), notamment afin d'éviter que l'organe mobile ne bute trop fortement sur la butée physique haute.

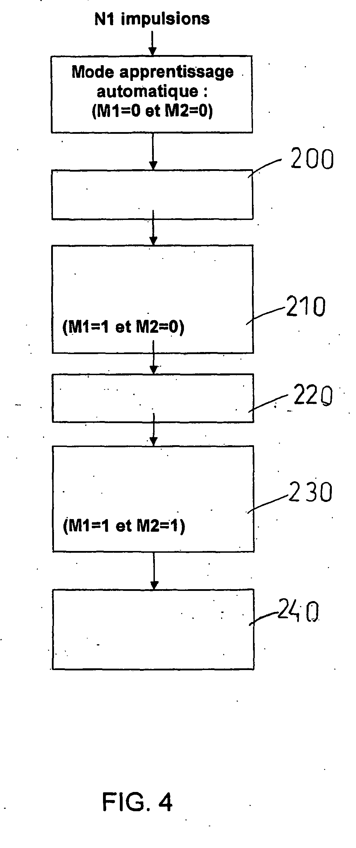

Selon un autre exemple illustré à la figure 4, N₁ appuis rapprochés sur l'interrupteur inverseur provoquent le passage en mode d'apprentissage automatique des fins de course et dans lequel on enregistre les positions de fins de course dès la détection des butées physiques lors de la commande de l'organe mobile notamment par un opérateur, et dès l'enregistrement des deux fins de course, les moyens logiques de traitement provoquent le retour du procédé en mode normal d'actionnement.

Plus particulièrement, selon ce mode de réalisation illustré à la figure 4, le circuit électronique peut présenter deux mémoires M₁ et M₂ prenant soit la valeur zéro, soit la valeur un. Lors de la mise sous tension, le circuit électronique passe en mode d'apprentissage des fins de course, les mémoires M₁ et M₂ étant mises à zéro. Le repérage des fins de course peut ensuite être réalisé de la manière suivante :
- actionnement dans un premier sens de l'organe mobile par une commande de l'opérateur (Etape 200),
- détection de la première butée physique; le circuit électronique provoque l'arrêt de l'organe mobile (coupure, alimentation, bobinage, moteur) et l'enregistrement de la première fin de course, la mémoire M₁ est mise à un, la mémoire M₂ restant à zéro. Un registre d'incrémentation/décrémentation est mis à zéro (Etape 210),
- actionnement dans un deuxième sens de l'organe mobile par l'opérateur, le registre s'incrémentant avec le déplacement de l'organe mobile (Etape 220),
- détection de la deuxième butée physique ; le circuit électronique provoque l'arrêt du moteur (coupure alimentation bobinage moteur) et enregistre la deuxième position de fin de course, notamment en recopiant la valeur du compteur de position réelle dans une deuxième mémoire au registre. La mémoire M₂ est mise à un (Etape 230),
- lorsque M₁ = 1 et M₂ = 2, le circuit électronique passe en mode normal d'actionnement de l'organe mobile (Etape 240).

Comme le mode de réalisation précédent, le premier registre (compteur de position réelle) est comparé sans cesse à la valeur de la deuxième mémoire. Lorsque le compteur de position réelle est à quelques unités, soit de la valeur zéro (proche de la première fin de course), soit de la valeur de la deuxième mémoire (proche de la deuxième fin de course), le circuit électronique coupe l'alimentation des bobinages moteurs afin d'éviter des efforts trop importants lorsque l'organe mobile rencontre les butées physiques.

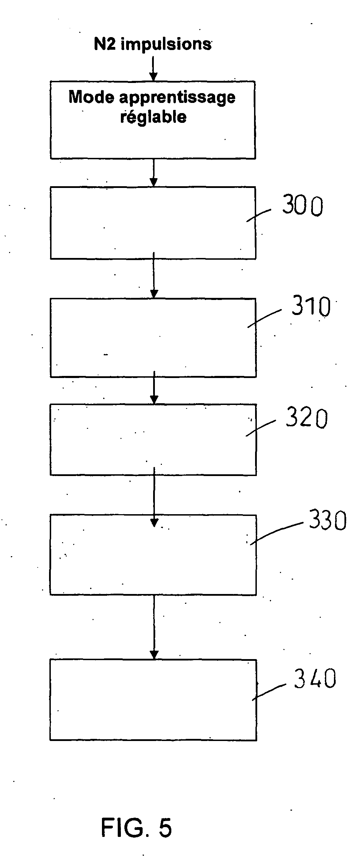

Selon l'exemple de réalisation de la figure 5, N₂ appuis fugitifs rapprochés sur l'interrupteur inverseur provoquent le passage en mode d'apprentissage des fins de course réglables au cours duquel l'organe mobile est actionné par l'utilisateur jusqu'aux fins de course désirées, les fins de course étant enregistrées à l'expiration respectivement d'une première et d'une seconde temporisations d'inaction du moteur après actionnement, l'expiration d'une temporisation de sortie provoquant le passage en mode normal d'actionnement de l'organe mobile.

Plus particulièrement tel qu'illustré à la figure 5, N₂ impulsions sur l'interrupteur inverseur provoquent le passage en mode d'apprentissage réglable. L'apprentissage manuel des fins de course est alors réalisé par l'utilisateur selon les étapes suivantes :
- actionnement dans un premier sens en appuyant sur l'interrupteur inverseur (par un ou plusieurs appuis) jusqu'à la position de fin de course désirée, par exemple, le point bas (Etape 300),
- à l'expiration d'une première temporisation d'inaction du moteur, le circuit électronique enregistre la position comme première fin de course, notamment en mettant à zéro un registre de position (Etape 310),
- actionnement dans un deuxième sens par l'utilisateur en appuyant sur l'interrupteur inverseur, par un ou plusieurs appuis jusqu'à la deuxième position de fin de course désirée, au cours de cet actionnement, le registre s'incrémente selon le déplacement de l'organe mobile (Etape 320),
- à l'expiration d'une deuxième temporisation d'inaction du moteur, le circuit électronique provoque l'enregistrement de la position haute comme deuxième fin de course, et copie la valeur du registre dans une deuxième mémoire ou registre (Etape 330),
- une temporisation de sortie permet alors le retour en mode normal d'actionnement (Etape 340).

Avantageusement, chaque enregistrement des fins de course peut être signalé par les moyens logiques de traitement, en actionnant l'organe mobile suivant un aller-retour. Par exemple, s'il s'agit de la fin de course haute, l'enregistrement est signalé par une rotation de descente du rotor puis une rotation de montée. S'il s'agit de la fin de course basse, l'enregistrement est signalé par une rotation de montée suivie d'une rotation de descente du rotor.

En mode normal d'actionnement, la valeur du premier registre (compteur de position réelle) s'incrémente et se décrémente en fonction des déplacements de l'organe mobile et est comparée sans cesse à la valeur de la deuxième mémoire.

Lorsque le compteur est à zéro (fin de course basse), ou atteint la valeur de la deuxième mémoire (fin de course haute), l'électronique arrête le moteur.

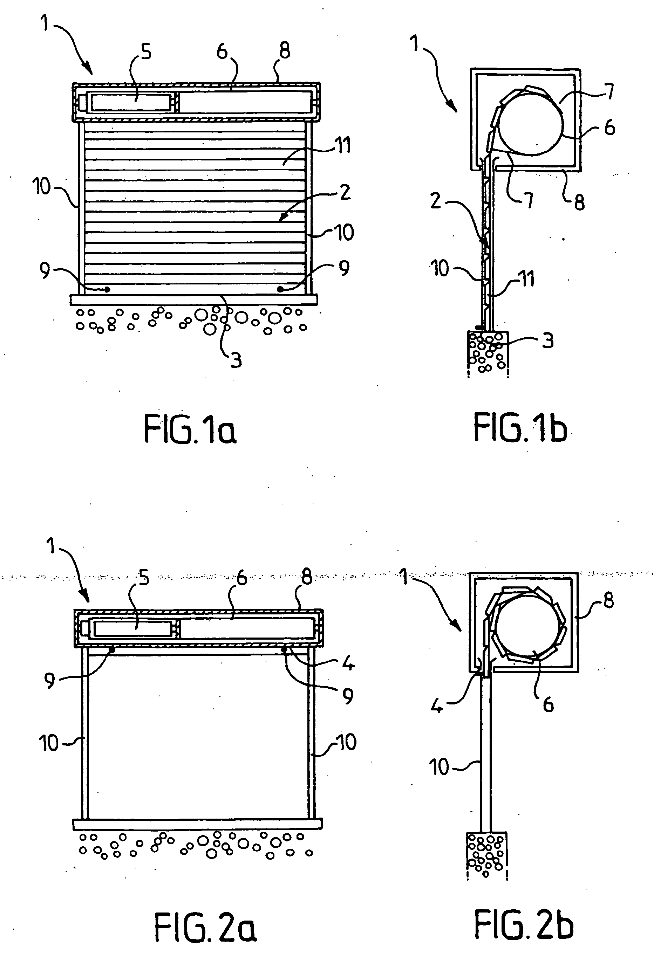

Le dispositif d'ouverture et de fermeture 1 peut être un volet roulant, tel qu'illustré aux figures 1a, 2b, 2a et 2b. Selon l'exemple illustré, il peut s'agir ainsi d'un volet roulant comportant un tambour d'enroulement 6 autour duquel s'enroule un tablier de volet roulant. Le tambour est mû par un moteur 5 par exemple tubulaire, notamment logé dans le tambour 6. Les coulisses 10 permettent de guider les lames du tablier.

En outre, le volet roulant comporte entre l'extrémité supérieure du tablier de volet roulant et le tambour d'enroulement 6, un verrou d'attache 7, interdisant, d'une part, le relevage frauduleux du tablier en positon basse, permettant d'autre part au moteur de se bloquer lorsque le tablier atteint sa butée basse 3, tel qu'illustré aux figures 1a et 2b notamment. La dernière lame du volet roulant est en outre équipée de deux arrêts 9 venant coopérer avec la butée haute 4, matérialisée par un coffre 8 de volet roulant.

Le procédé selon l'invention peut être mis en oeuvre par un dispositif de fermeture et d'ouverture. Ce dispositif comporte un organe mobile 2, des moyens d'actionnement de l'organe mobile constitués par un moteur électrique 5, des moyens filaires de commande de l'organe mobile comprenant au moins un interrupteur inverseur, des moyens pour détecter le déplacement de l'organe mobile, ainsi que des moyens logiques de traitement constitués par un circuit électronique pour l'actionnement de l'organe mobile et de la gestion des fins de course.

Le dispositif comporte, d'une part, au moins un mode de programmation des fins de course, et d'autre part, au moins un mode d'actionnement de l'organe mobile au cours duquel les moyens logiques de traitement provoquent l'arrêt de l'organe mobile lorsque les fins de course sont approchées, voire atteintes, le dispositif présentant des moyens de déclenchement dudit au moins un mode de programmation des fins de course.

Le câblage électrique du dispositif est tel qu'il assure une alimentation en continu du circuit électronique Elec ainsi que des moyens pour détecter la période de déplacement de l'organe mobile, quel que soit l'état de l'interrupteur inverseur. Lesdits moyens de déclenchement dudit au moins un mode de programmation de fin de course sont constitués par l'interrupteur inverseur ainsi que par le circuit électronique et plus particulièrement des moyens de détection de changement d'état de l'interrupteur inverseur.

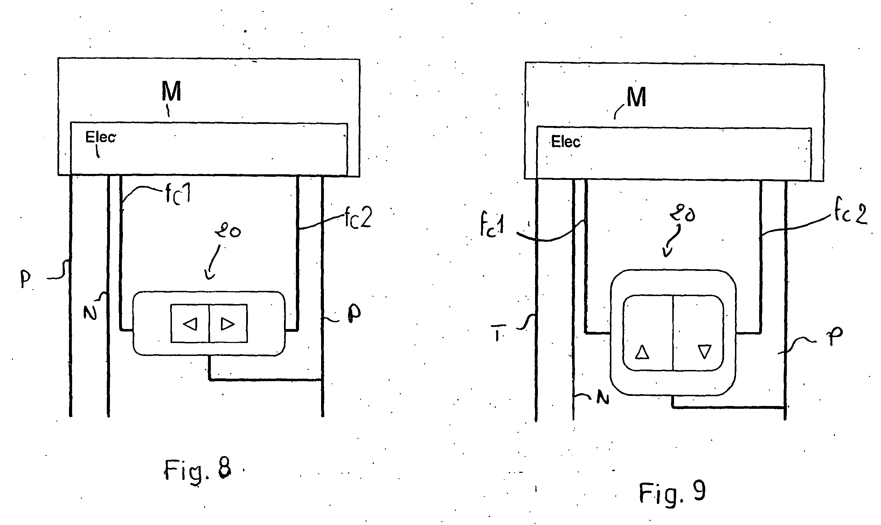

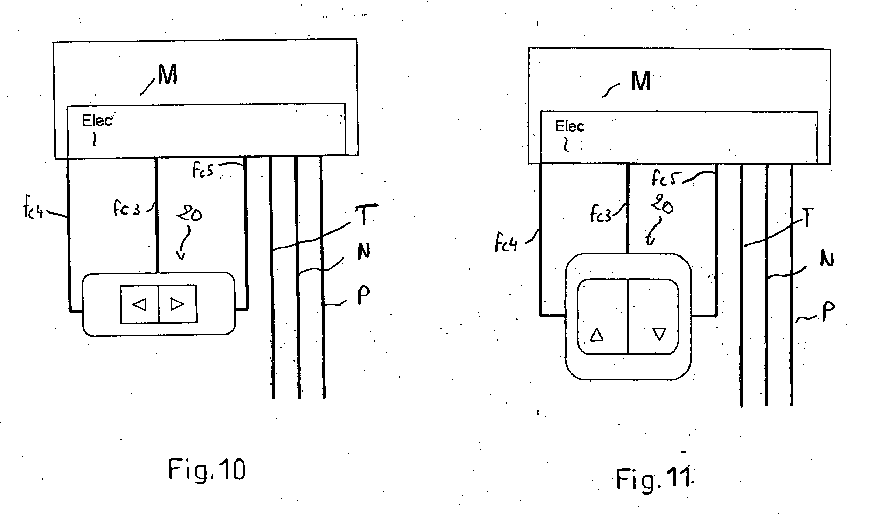

Trois modes de réalisation d'un câblage conforme à l'invention sont respectivement illustrés aux figures 6 et 7, aux figures 8 et 9, et aux figures 10 et 11.

Le mode de réalisation des figures 6 et 7 se distingue par un unique fil de commande fc. L'interrupteur 20 (double ou à trois positions) permet d'assurer un contact électrique, soit entre la ligne de phase P et la ligne de commande, soit entre la ligne de neutre N et la ligne de commande, pour commander le moteur dans un sens ou dans l'autre, ou encore de n'autoriser aucun contact pour maintenir le moteur M à l'arrêt.

L'électronique de commande, plus particulièrement le circuit électronique présente des moyens pour détecter la phase et le neutre. Lorsque la phase P est détectée, le circuit électronique actionne un relais pour provoquer la rotation du moteur dans un sens. Lorsque le neutre N est détecté, le circuit électronique actionne un autre relais pour provoquer la rotation du moteur dans l'autre sens.

On notera que cet exemple nécessite un câblage simple, comprenant trois fils au minimum dans le cas d'un système monophasé, le cas échéant quatre lorsque la terre T est nécessaire. Un câblage à un seul fil de commande est également possible pour un système triphasé.

Le mode de réalisation des figures 8 et 9 se distingue par deux fils de commande fc1, fc2. L'interrupteur inverseur permet ici d'assurer un contact entre la phase et le premier fil de commande ou entre la phase et le deuxième fil de commande ou encore de n'autoriser aucun contact.

L'électronique de commande, notamment le circuit électronique présente des moyens pour détecter la phase (P) soit sur le premier fil de commande fc1, soit sur le deuxième fil de commande fc2. Si la phase est détectée sur le premier fil de commande, les moyens logiques de traitement actionnent un relais pour provoquer la rotation du moteur dans un sens. Si la phase est détectée sur le deuxième fil de commande, un autre relais est actionné et provoque la rotation du moteur dans l'autre sens. Si aucune phase n'est détectée, ni sur le premier fil, ni sur le deuxième fil de commande, le moteur reste à l'arrêt. Il est à noter qu'un câblage à deux fils peut être également utilisé pour un système triphasé.

Le mode de réalisation des figures 10 et 11 se distingue par la présence de trois fils de commande fc3, fc4, fc5. Avantageusement, selon ce mode de réalisation, ces trois fils peuvent être alimentés en très basse tension. L'un des fils de commande peut être alimenté en tension continue par le circuit électronique Elec à une tension. L'interrupteur inverseur assure un contact électrique soit entre ce fil fc3 et le fil de commande fc4, soit entre ce fil fc3 et le fil de commande fc5, pour respectivement assurer la commande du moteur dans un sens ou dans l'autre grâce à deux relais, ou encore dans une position sans contact (moteur à l'arrêt). Le circuit électronique présente des moyens pour détecter la tension sur le fil de commande 1 ou sur le fil de commande 2. Si la tension est détectée sur le fil de commande 1, un relais est actionné pour provoquer la rotation du moteur dans un premier sens. Si la tension est détectée sur le fil de commande 2, un autre relais est actionné pour provoquer la rotation du moteur dans l'autre sens.

Enfin, le procédé selon l'invention peut être mis en oeuvre par un moteur à gestion des fins de cours électroniques à commande filaire.

Ledit moteur comprend des moyens pour détecter le déplacement du rotor dudit moteur, ainsi qu'un circuit électronique pour l'enregistrement des fins de course et la gestion desdites fins de course lors de l'actionnement dudit moteur. Au moins une ligne de phase P et une ligne de neutre N sont prévues pour l'alimentation dudit moteur, ainsi que des moyens de commande du moteur dans un sens ou dans l'autre, constitués par un interrupteur inverseur.

Le moteur à gestion des fins de course électroniques comporte, d'une part, au moins un mode de programmation des fins de course, et d'autre part, un mode normal d'actionnement de l'organe mobile au cours duquel le circuit électronique provoque l'arrêt du rotor lorsque les fins de course sont approchées, voire atteintes. Le moteur présente des moyens de déclenchement dudit au moins un mode de programmation des fins de course.

La ligne de phase P et la ligne de neutre N alimentent directement et en permanence ledit circuit électronique ainsi que lesdits moyens pour détecter le déplacement de l'organe mobile, quel que soit l'état de l'interrupteur inverseur. Les moyens de déclenchement dudit au moins un mode de programmation des fins de course sont constitués par l'interrupteur inverseur ainsi que par des moyens de détection de changement d'état de l'interrupteur inverseur.

Ce moteur à gestion des fins de course électroniques permettra ainsi la mise en oeuvre du procédé conforme à l'invention.

Il s'agit d'un moteur dit polyvalent. Avantageusement, le moteur peut présenter des moyens pour prendre en compte le déplacement du rotor quel que soit l'état de l'interrupteur inverseur 20. Aussi, un registre s'incrémente ou se décrémente dans le cas de la rotation du rotor, même si l'interrupteur est dans sa position d'arrêt.

Tel qu'illustré à la figure 6 selon un exemple de câblage du moteur, l'interrupteur inverseur 20 peut être un interrupteur à trois positions ou encore, tel qu'illustré à la figure 7, un double interrupteur à deux positions. Le câblage se distingue de celui de l'état de l'art en ce qu'il assure une alimentation continue de l'électronique du moteur, même lorsque l'interrupteur inverseur est dans la position « arrêt ». Selon ce dernier mode de réalisation, le double interrupteur interdit mécaniquement une double connexion simultanée entre le neutre N et la commande et d'autre part entre la commande et la phase P.

Selon l'exemple de la figure 6, si l'interrupteur trois positions est en position centrale, le circuit électronique du moteur ne détecte aucune tension sur la ligne de commande. Dans ce cas, il n'y a pas d'action électrique sur les bobinages du moteur.

Si l'interrupteur est positionné vers le haut ou vers le bas, le circuit électronique détecte soit le neutre, soit la phase du secteur sur la ligne commandée et actionne le moteur dans un sens ou dans l'autre en fonction de la ligne détectée.

Le principe de fonctionnement est similaire pour l'exemple de la figure 7, avec un double interrupteur. Si aucun interrupteur n'est actionné, le circuit électronique ne détecte aucune tension sur la ligne de commande et n'actionne pas le moteur. En fonction de l'appui sur l'un ou l'autre des deux interrupteurs, le circuit électronique détecte soit la ligne de phase, soit la ligne de neutre, et actionne le moteur dans un sens ou dans l'autre en fonction de la détection.

Naturellement, d'autres modes de réalisation auraient pu être envisagés sans pour autant sortir du cadre de l'invention définie par les revendications ci-après.

## Revendications

1. Procédé de commande d'un dispositif (1) de fermeture et d'ouverture comportant un organe mobile (2), ledit organe mobile (2) se déplaçant entre deux positions extrêmes matérialisées par un ou des dispositifs de fins de course, ledit dispositif à commander (1) comportant des moyens d'actionnement de l'organe mobile constitués par un moteur électrique (5), des moyens filaires de commande de l'organe mobile comportant au moins un interrupteur inverseur, des moyens pour détecter le déplacement de l'organe mobile, ainsi que des moyens logiques de traitement constitués par une circuit électronique pour l'actionnement de l'organe mobile et la gestion de fins de course, **caractérisé en ce que** ledit procédé comporte au moins deux modes de programmation des fins de course, avec d'une part, un mode d'apprentissage des fins de course automatiques au cours duquel les fins de courses sont repérées par la détection et la reconnaissance automatique des positions des butées physiques, et d'autre part, un mode d'apprentissage des fins de course réglables au cours duquel les fins de courses sont repérées et inscrites par des opérations de commande de l'utilisateur,
ledit procédé comportant de plus un mode normal d'actionnement de l'organe mobile au cours duquel lesdits moyens logiques de traitement provoquent l'arrêt de l'organe mobile lorsque les fins de course mémorisées sont approchées, voire atteintes,
ledit dispositif présentant, en outre, des moyens de déclenchement desdits au moins deux modes de programmation des fins de course,
de plus, le procédé consiste à alimenter de manière continue le circuit électronique des moyens logiques de traitement, ainsi que lesdits moyens pour détecter le déplacement de l'organe mobile, lesdits moyens de déclenchement desdits au moins deux modes de programmation des fins de course étant constitués par le circuit électronique et plus particulièrement par des moyens de détection de changement d'état de l'interrupteur inverseur,
et dans lequel procédé, on déclenche chaque mode de programmation des fins de course désirées par des appuis fugitifs rapprochés sur l'interrupteur inverseur, du type impulsions, d'un nombre déterminé supérieur à un, et ledit mode d'apprentissage des fins de course automatiques et le mode d'apprentissage des fins de course réglables étant respectivement déclenchés par un nombre N1 et un nombre N2 d'appuis fugitifs rapprochés avec N1 différent de N2.

2. Procédé selon la revendication 1, dans lequel, en mode normal d'actionnement, les moyens logiques de traitement provoquent la coupure de l'alimentation du moteur de l'organe mobile dès la détection d'un obstacle, sans passage en mode de programmation, sans modification des fins de course.

3. Procédé selon la revendication 2, dans lequel la sensibilité de la détection au blocage en mode normal d'actionnement est différente de la sensibilité de détection en mode d'apprentissage automatique des fins de course.

4. Procédé selon la revendication 1, dans lequel N1 appuis rapprochés sur l'interrupteur inverseur provoquent le départ d'une temporisation au cours de laquelle le procédé est en mode d'apprentissage automatique des fins de course, l'organe mobile étant actionné par lesdits moyens d'actionnement et lesdits moyens de commande, dans un sens puis dans l'autre, pour le repérage successif des butées physiques et l'enregistrement de leur position comme fins de course, l'expiration de ladite temporisation provoquant le retour du procédé en mode normal d'actionnement de l'organe mobile.

5. Procédé selon la revendication 1, dans lequel N₁ appuis rapprochés sur l'interrupteur inverseur provoquent le passage en mode d'apprentissage automatique des fins de course, et dans lequel on enregistre les positions des fins de course dès la détection des butées physiques lors de l'actionnement de l'organe mobile notamment par un opérateur, et dès l'enregistrement des deux fins de course, les moyens logiques de traitement provoquent le retour du procédé en mode normal d'actionnement.

6. Procédé selon la revendication 1 seule ou prise en combinaison avec l'une quelconque des revendications 2 à 5, dans lequel N₂ appuis fugitifs rapprochés sur l'interrupteur inverseur provoquent le passage en mode d'apprentissage des fins de course réglables au cours duquel l'organe mobile est actionné par l'utilisateur jusqu'aux fins de course désirées, les fins de course étant enregistrées à l'expiration respectivement d'une première et seconde temporisations d'inaction du moteur après actionnement, l'expiration d'une temporisation de sortie provoquant le passage en mode normal d'actionnement de l'organe mobile.

7. Procédé selon la revendication 6, dans lequel à chaque enregistrement de fins de course, les moyens logiques de traitement signalent l'enregistrement par un aller-retour de l'organe mobile.

8. Dispositif (1) de fermeture et d'ouverture pour la mise en oeuvre du procédé selon l'une des revendications 1 à 7, comportant un organe mobile (2), des moyens d'actionnement de l'organe mobile constitués par un moteur électrique (5), des moyens filaires de commande de l'organe mobile, des moyens pour détecter le déplacement de l'organe mobile, ainsi que des moyens logiques de traitement constitués par un circuit électronique pour l'actionnement de l'organe mobile et la gestion des fins de course, ledit dispositif comportant, d'une part, au moins un mode de programmation des fins de course, et d'autre part, un mode normal d'actionnement de l'organe mobile au cours duquel les moyens logiques de traitement provoquent l'arrêt de l'organe mobile lorsque les fins de course sont approchées voire atteintes, le dispositif présentant des moyens de déclenchement dudit au moins un mode de programmation des fins de course **caractérisé en ce que** le câblage électrique du dispositif est tel qu'il assure une alimentation en continu du circuit électronique ainsi que desdits moyens pour détecter la période de déplacement de l'organe mobile, quel que soit l'état de l'interrupteur inverseur, et **en ce que** lesdits moyens de déclenchement dudit au moins un mode de programmation des fins de course sont constitués par l'interrupteur inverseur ainsi que par les moyens de détection de changement d'état de l'interrupteur inverseur.

## Claims

1. Method of controlling an opening and closing device (1) comprising a movable member (2), said movable member (2) moving between two extreme positions represented by one or more end-of-travel devices, said device to be controlled (1) comprising means of actuating the movable member consisting of an electric motor (5), cable means controlling the movable member comprising at least one reversible switch, means for detecting the movement of the movable member, as well as logic processing means consisting of an electronic circuit for actuating the movable member and controlling ends of travel, **characterised in that** said method comprises at least two end-of-travel programming modes with firstly a mode for learning the automatic ends of travel during which the ends of travel are marked by the detection and automatic recognition of the positions of the physical stops and secondly a mode of learning the adjustable ends of travel during which the ends of travel are marked and recorded by user control operations,
said method also comprising a normal mode of actuating the movable member during which said logic processing means cause the stoppage of the movable member when the ends of travel stored are approached or even reached,
said device also having means of triggering said at least two end-of-travel programming modes,
in addition, the method consists of continuously supplying the electronic circuit of the logic processing means, as well as said means for detecting the movement of the movable member, said means of triggering said at least two end-of-travel programming modes consisting of the electronic circuit and more particularly means of detecting a change of state of the reversible switch,
and in which method each desired end-of-travel programming mode is triggered by close-together fleeting presses on the reversible switch, of the pulse type, of a given number greater than one, and said learning mode for the automatic ends of travel and the learning mode for the adjustable ends of travel being respectively triggered by a number N1 and a number N2 of close-together fleeting presses with N1 different from N2.

2. Method according to claim 1, wherein, in normal actuating mode, the logic processing means cause the cutting off of the supply to the motor of the movable member as soon as an obstacle is detected, without going into programming mode, without modification of the ends of travel.

3. Method according to claim 2, wherein the sensitivity of the detection on blocking in normal actuating mode is different from the detection sensitivity in automatic end-of-travel learning mode.

4. Method according to claim 1, wherein N1 close-together presses on the reversible switch cause the initiation of a time delay during which the method is in automatic end-of-travel learning mode, the movable member being actuated by said actuation means and said control means, in one direction and then in the other, for the successive markings of the physical stops and the recording of their position as ends of travel, the expiry of said time delay causing the return of the method into normal mobile member actuation mode.

5. Method according to claim 1, wherein N₁ close-together presses on the reversible switch cause passage into automatic end-of-travel learning mode, and wherein the positions of the ends of travel are recorded as soon as the physical stops are detected during actuation of the movable member in particular by an operator and, as soon as the two ends of travel are recorded, the logic processing means cause the return of the method into normal actuation mode.

6. Method according to claim 1 alone or taken in combination with any one of claims 2 to 5, wherein N₂ close-together fleeting presses on the reversible switch cause passage into adjustable end-of-travel learning mode during which the movable member is actuated by the user to the ends of travel desired, the ends of travel being recorded at the expiry respectively of first and second inaction time delays of the motor after actuation, the expiry of an output time delay causing passage into normal actuation mode of the movable member.

7. Method according to claim 6, wherein, at each recording of ends of travel, the logic processing means signal the recording by a double stroke of the movable member.

8. Opening and closing device (1) for implementing the method according to one of claims 1 to 7, comprising a movable member (2), means of actuating the movable member consisting of an electric motor (5), cable means of controlling the movable member, means for detecting the movement of the movable member, as well as logic processing means consisting of an electronic circuit for actuating the movable member and managing the ends of travel, said device comprising firstly at least one end-of-travel programming mode and secondly a normal mode of actuating the movable member during which the logic processing means cause the stoppage of the movable member when the ends of travel are approached or even reached, the device having means of triggering said at least one end-of-travel programming mode, **characterised in that** the electric cabling of the device is such that it provides a continuous supply to the electronic circuit as well as said means for detecting the period of movement of the movable member, whatever the state of the reversible switch, and **in that** said means of triggering said at least one end-of-travel programming mode consist of the reversible switch as well as the means of detecting the change of state of the reversible switch.

## Patentansprüche

1. Verfahren zum Steuern einer Schließ- und Öffnungsvorrichtung (1), umfassend ein bewegliches Organ (2), wobei sich das bewegliche Organ (2) zwischen zwei Endpositionen bewegt, die durch eine oder mehrere Anschlagvorrichtungen umgesetzt sind, wobei die zu steuernde Vorrichtung (1) Mittel zum Betätigen des beweglichen Organs, die aus einem Elektromotor (5) bestehen, drahtgebundene Mittel zum Steuern des beweglichen Organs, die mindestens einen Umschalter umfassen, Mittel zum Erfassen der Verschiebung des beweglichen Organs, sowie logische Verarbeitungsmittel, die aus einer elektronischen Schaltung für die Betätigung des beweglichen Organs und die Verwaltung der Anschläge bestehen, umfasst, **dadurch gekennzeichnet, dass** das Verfahren mindestens zwei Betriebsarten zum Programmieren der Anschläge umfasst, einerseits mit einer Betriebsart zum Erlernen der automatischen Anschläge, bei der die Anschläge durch die Erfassung und die automatische Erkennung der Positionen der physikalischen Anschläge geortet werden, und andererseits eine Betriebsart zum Erlernen der einstellbaren Anschläge, bei der die Anschläge geortet und durch Steuervorgänge des Benutzers eingetragen werden,
wobei das Verfahren zudem eine Betriebsart zur normalen Betätigung des beweglichen Organs umfasst, bei der die logischen Verarbeitungsmittel das Anhalten des beweglichen Organs verursachen, wenn man sich den gespeicherten Anschlägen nähert oder diese gar erreicht,
wobei die Vorrichtung ferner Mittel zum Auslösen der mindestens zwei Betriebsarten zum Programmieren der Anschläge aufweist,
wobei zudem das Verfahren darin besteht, die elektronische Schaltung der logischen Verarbeitungsmittel sowie die Mittel zum Erfassen der Verschiebung des beweglichen Organs ununterbrochen zu versorgen, wobei die Mittel zum Auslösen der mindestens zwei Betriebsarten zum Programmieren der Anschläge aus einer elektronischen Schaltung bestehen und genauer gesagt aus Mitteln zum Erfassen einer Zustandsänderung des Umschalters,
und wobei in dem Verfahren jede Betriebsart zum Programmieren der gewünschten Anschläge durch impulsartige, flüchtige und schnell aufeinanderfolgende Tastendrücke auf den Umschalter ausgelöst wird, und zwar in einer bestimmten Anzahl von mehr als eins, und wobei die Betriebsart zum Erlernen der automatischen Anschläge und die Betriebsart zum Erlernen der einstellbaren Anschläge jeweils durch eine Anzahl N1 und eine Anzahl N2 von flüchtigen und schnell aufeinanderfolgenden Tastendrücken ausgelöst werden, wobei N1 ungleich N2 ist.

2. Verfahren nach Anspruch 1, wobei in der Betriebsart des normalen Betätigens die logischen Verarbeitungsmittel das Abschalten der Versorgung des Motors des beweglichen Organs verursachen, sobald ein Hindernis erfasst wird, ohne in die Betriebsart des Programmierens überzugehen, ohne die Anschläge zu ändern.

3. Verfahren nach Anspruch 2, wobei die Empfindlichkeit der Erfassung für die Blockierung in der normalen Betätigungsbetriebsart anders als die Empfindlichkeit der Erfassung in der Betriebsart des automatischen Erlernen der Anschläge ist.

4. Verfahren nach Anspruch 1, wobei N1 schnell aufeinanderfolgende Tastendrücke auf den Umschalter den Start einer Verzögerung verursachen, während der das Verfahren sich in der Betriebsart des automatischen Erlernens der Anschläge befindet, wobei das bewegliche Organ von den Betätigungsmitteln und den Steuermitteln in einer Richtung und dann in die andere für das aufeinanderfolgende Orten der physikalischen Anschläge und die Aufzeichnung ihrer Position als Anschläge betätigt wird, wobei das Ablaufen der Verzögerung die Rückkehr des Verfahrens in die normale Betätigungsbetriebsart des mobilen Organs verursacht.

5. Verfahren nach Anspruch 1, wobei N₁ schnell aufeinanderfolgende Tastendrücke auf den Umschalter den Übergang in die Betriebsart des automatischen Erlernens der Anschläge verursachen, und wobei die Positionen der Anschläge aufgezeichnet werden, sobald die physikalischen Anschläge bei der Betätigung des beweglichen Organs insbesondere durch einen Benutzer erfasst werden, und sobald die beiden Anschläge aufgezeichnet wurden, die logischen Verarbeitungsmittel die Rückkehr des Verfahrens in die normale Betätigungsbetriebsart verursachen.

6. Verfahren nach Anspruch 1 alleine oder kombiniert mit einem der Ansprüche 2 bis 5, wobei N₂ flüchtige, schnell aufeinanderfolgende Tastendrücke auf den Umschalter den Übergang auf die Betriebsart des Erlernens der einstellbaren Anschläge verursachen, bei der das bewegliche Organ von dem Benutzer bis zu den gewünschten Anschläge betätigt wird, wobei die Anschläge beim Ablaufen jeweils einer ersten und zweiten Motoruntätigkeitsverzögerung nach der Betätigung aufgezeichnet werden, wobei das Ablaufen einer Ausgangsverzögerung den Übergang in die normale Betätigungsbetriebsart des beweglichen Organs verursacht.

7. Verfahren nach Anspruch 6, wobei bei jeder Aufzeichnung von Anschlägen die logischen Verarbeitungsmittel die Aufzeichnung durch einen Vor- und Rückgang des beweglichen Organs angeben.

8. Vorrichtung (1) zum Schließen und Öffnen für die Umsetzung des Verfahrens nach einem der Ansprüche 1 bis 7, umfassend ein bewegliches Organ (2), Mittel zum Betätigen des beweglichen Organs, die aus einem Elektromotor (5) bestehen, drahtgebundene Mittel zum Steuern des beweglichen Organs, Mittel zum Erfassen der Verschiebung des beweglichen Organs, sowie logische Verarbeitungsmittel, die aus einer elektronischen Schaltung für die Betätigung des beweglichen Organs und die Verwaltung der Anschläge bestehen, wobei die Vorrichtung einerseits mindestens eine Betriebsart zum Programmieren der Anschläge und andererseits eine Betriebsart zum normalen Betätigen des beweglichen Organs umfasst, bei der die logischen Verarbeitungsmittel das Anhalten des beweglichen Organs verursachen, wenn man sich den Anschlägen nähert oder diese gar erreicht, wobei die Vorrichtung Mittel zum Auslösen der mindestens einen Betriebsart zum Programmieren der Anschläge aufweist, **dadurch gekennzeichnet, dass** die elektrische Verkabelung der Vorrichtung derart ist, dass sie eine ununterbrochene Versorgung der elektronischen Schaltung sowie der Mittel bereitstellt, um den Verschiebungszeitraum des beweglichen Organs unabhängig vom Zustand des Umschalters zu erfassen, und dass die Mittel zum Auslösen der mindestens einen Betriebsart zum Programmieren der Anschläge aus dem Umschalter sowie aus den Mitteln zum Erfassen der Änderung des Zustandes des Umschalters bestehen.
